Europäisches Patentamt

European Patent Office

Office européen des brevets

(11) Veröffentlichungsnummer: **0 068 398**
**B1**

(12) **EUROPÄISCHE PATENTSCHRIFT**

(45) Veröffentlichungstag der Patentschrift:
08.05.85

(21) Anmeldenummer: **82105441.8**

(22) Anmeldetag· **22.06.82**

(51) Int. Cl.⁴: **C 08 L 27/06,** C 08 L 23/28,
C 08 L 33/12, C 08 K 5/10,
C 08 J 5/18

(54) Thermoplastische Formmassen auf der Basis von Vinylchloridpolymerisaten und Schlagzähmodifizierungspolymeren.

(30) Priorität: 27.06.81 DE 3125376

(43) Veröffentlichungstag der Anmeldung·
05.01.63 Patentblatt 83/1

(45) Bekanntmachung des Hinweises auf die Patenterteilung:
08.05.85 Patentblatt 85/19

(84) Benannte Vertragsstaaten:
AT BE DE FR GB IT NL SE

(56) Entgegenhaltungen:
US - A - 3 936 417

(73) Patentinhaber: HOECHST AKTIENGESELLSCHAFT,
Postfach 80 03 20, D-6230 Frankfurt am Main 80 (DE)

(72) Erfinder: Säckl, Herbert, Max-Halbe-Strasse 5,
D-8261 Neuötting 2 (DE)
Erfinder: Wottka, Bernhard, Billerstrasse 8, D-8261 Kastl
(DE)
Erfinder: Mücke, Rainer, Dr., Hoher Göllweg 14,
D-8261 Burgkirchen/Alz (DE)

## Beschreibung

Die Erfindung betrifft thermoplastische Formmassen auf der Basis von Vinylchloridpolymeren und Polymeren zur Schlagzähmodifizierung, die gut verarbeitbar sind und Formkörper ergeben, die insbesondere für den Außeneinsatz geeignet sind.

Formkörper aus Vinylchloridpolymerisaten sind wegen ihrer relativ guten chemischen und physikalischen Eigenschaften vielseitig einsetzbar. Für einen Außeneinsatz, wo insbesondere Wetterstabilität, Stabilität gegenüber ultravioletter Strahlung (UV-Stabilität), Schlagzähigkeit auch bei Temperaturen unterhalb von 0 C und oftmals auch noch eine relativ hohe Transparenz verlangt werden, reichen jedoch die Eigenschaftswerte der Formkörper aus Vinylchloridpolymerisaten im allgemeinen nicht mehr aus. Formkörper aus Vinylchloridpolymerisaten sind bekanntlich bei niedrigen Temperaturen relativ wenig schlagzäh, um nur eine der aufgezählten Eigenschaften herauszugreifen.

Im Lauf der Zeit sind zahlreiche Mittel zur Verbesserung der Schlagzähigkeit von Vinylchloridpolymerisaten beschrieben worden. Diese Mittel sind in der Regel Polymere, die mit Vinylchloridpolymerisaten mehr oder weniger gut mischbar sind.

Aus der großen Zahl der möglichen Schlagzähmodifizierungspolymeren seien beispielsweise genannt: chlorierte Polyolefine wie chloriertes Polyethylen und chloriertes Polypropylen; Ethylen-Propylen-Kautschuke; Ethylen-Vinylacetat-Copolymere; Polymere vom Butadien-Typ wie Acrylnitril-Butadien-Styrol (ABS)-, Methylmethacrylat-Butadien-Styrol (MBS)- und Methylmethacrylat-Acrylnitril Butadien-Styrol (MABS)-Polymere; chlorsulfoniertes Polyethylen; und Polymere vom Acrylat-Typ wie Homopolymere und Copolymere von Alkylacrylaten und Alkylmethacrylaten.

Bei der Schlagzähmodifizierung von Vinylchloridpolymeren ist jedoch zu beachten, daß durch das Zumischen eines oder mehrerer Modifizierungsmittel zwar die Schlagzähigkeit der hergestellten Formkörper erhöht wird, daß aber gleichzeitig vorteilhafte Eigenschaften der Vinylchloridpolymerisate wie Klarheit, chemische Beständigkeit, Zugfestigkeit und Elastizität beeinträchtigt werden können. Aus den zahlreichen Schlagzähmodifizierungsmitteln müssen deshalb jeweils jene ausgewählt werden, die im Hinblick auf die Verarbeitung der Formmassen und im Hinblick auf den beabsichtigten Einsatz der hergestellten Formkörper die gewünschten Eigenschaften auch tatsächlich bringen.

Um beispielsweise die Verarbeitbarkeit von Vinylchloridpolymerisaten und die Schlagzähigkeit sowie Transparenz der daraus hergestellten Formkörper zu verbessern, wird in der deutschen Auslegeschrift 2 014 851 empfohlen, ein spezielles Mischpolymerisat auf der Basis von Methylmethacrylat in relativ großen Mengen dem Vinylchloridpolymerisat zuzumischen. Die Wetterbeständigkeit (Witterungsstabilität) der Formkörper ist relativ gering.

Formmassen zur Herstellung von Formkörpern, die unter Umständen auch für den Außeneinsatz benutzt werden können, sind in der deutschen Auslegeschrift 1 620 956 beschrieben. Sie bestehen im wesentlichen aus 80 bis 95 Gew.-% Vinylchloridpolymerisat und 5 bis 20 Gew.-% von einem speziellen Methylmethacrylat-Butadien-Styrol-Polymeren. Diese Formkörper zeigen zwar eine genügend hohe Schlagzähigkeit auch bei Temperaturen unter 0°C, ihre Transparenz und Wetterbeständigkeit, insbesondere die UV-Stabilität, sind jedoch relativ niedrig.

Schließlich sind aus der japanischen Auslegeschrift Sho 42-14167, aus der japanischen Offenlegungsschrift Sho 52-93459 und aus der US-Patentschrift 3 936 417 thermoplastische Formmassen bekannt, die im wesentlichen aus (a) Polyvinylchlorid, (b) chloriertem Polyethylen und (c) Polymethylmethacrylat bestehen. Diese bekannten Formmassen lassen hinsichtlich Verarbeitbarkeit noch zu wünschen übrig Die daraus hergestellten schlagzähen Formkörper sind für den Außeneinsatz im Prinzip brauchbar, sie erfüllen aber nicht insbesondere die Forderungen hinsichtlich Wetterbeständigkeit, UV-Stabilität und teilweise auch hinsichtlich Transparenz.

Aufgabe der Erfindung ist es demnach, eine thermoplastische Formmasse zu schaffen, die auf den üblichen Verarbeitungsmaschinen für thermoplastische Massen, vorzugsweise auf Kalandern, gut verarbeitbar ist und Formkörper ergibt, die insbesondere eine hohe Schlagzähigkeit, Wetterstabilität, UV-Stabilität und gegebenenfalls Transparenz aufweisen.

Es wurde überraschenderweise gefunden, daß eine spezielle Mischung aus ausgewählten Polymeren, nämlich aus Vinylchloridpolymerisaten, chloriertem Polyethylen und Polymethylmethacrylat, und aus mit Vinylchloridpolymerisaten verträglichen Weichmachern die geforderten Eigenschaftswerte in besonders hohem Ausmaß erfüllt.

Die erfindungsgemäßen Formmassen auf der Basis von Vinylchloridpolymeren und Polymeren zur Schlagzähmodifizierung bestehen im wesentlichen aus

A) 35 bis 89 Gew.-% Vinylchloridpolymerisat, ausgewählt aus der Gruppe der Homopolymeren des Vinylchlorids und Vinylchlorid-Einheiten enthaltenden Copolymeren, wobei in der Komponente A) der Anteil an polymerisierten Vinylchlorid-Einheiten mindestens 70 Gew.-%, bezogen auf das Gewicht der Komponente A), beträgt;

B) 7 bis 30 Gew.-% chloriertem Polyethylen mit einem Chlorgehalt von 20 bis 50 Gew.-%, bezogen auf das Gewicht des chlorierten Polyethylens;

C) 3 bis 20 Gew.-% Polymethylmethacrylat; und

2

D) 1 bis 15 Gew.-% von mit Vinylchloridpolymerisaten verträglichen Weichmachern, Gewichtsprozente jeweils bezogen auf das Gewicht der Formmasse.

Die erfindungsgemäß einzusetzenden Vinylchlorid-Polymerisate (Komponente A) können Homopolymere des Vinylchlorids, Vinylchlorid-Einheiten enthaltende Copolymere oder Mischungen davon sein. Dabei beträgt in der Komponente A) der Anteil an polymerisierten Vinylchlorid-Einheiten mindestens 70 Gew.-%, vorzugsweise mindestens 85 Gew.-%, bezogen auf das Gewicht der Komponente A).

Die Menge an Vinylchlorid-Einheiten in den Vinylchlorid-Copolymeren kann demnach in weiten Grenzen variieren. Im Falle des Einsatzes von üblichen Copolymeren oder von Pfropfpolymeren allein als Komponente A) enthalten diese mindestens 70 Gew.-%, vorzugsweise mindestens 85 Gew.-% an (einpolymerisiertem) Vinylchlorid, bezogen auf Co- bzw. Pfropfpolymere. Werden dagegen die Vinylchlorid-Copolymeren und Vinylchlorid-Pfropfpolymeren mit Homopolymerisaten des Vinylchlorids gemischt, können sie wesentlich weniger als 70 Gew.-% Vinylchlorid-Einheiten enthalten.

Zur Copolymerisation von Vinylchlorid sind beispielsweise folgende Monomere geeignet: Olefine wie Ethylen und Propylen; Vinylester von geradkettigen oder verzweigten Carbonsäuren mit 2 bis 20, vorzugsweise 2 bis 4 C-Atomen, wie Vinylacetat, Vinylpropionat, Vinylbutyrat, Vinyl-2-ethylhexoat und Vinylstearat; Vinylhalogenide wie Vinylfluorid, Vinylidenfluorid und Vinylidenchlorid; Vinylether; ungesättigte Säuren, wie Malein-, Fumar-, Acryl-, Methacrylsäure und deren Monooder Diester mit Mono- oder Dialkoholen mit 1 bis 10 C-Atomen; Acrylnitril; Styrol; und Cyclohexylmaleinimid.

Zur Pfropfpolymerisation können beispielsweise elastomere Polymerisate verwendet werden, die durch Polymerisation von einem oder mehreren folgender Monomerer erhalten werden: Diene wie Butadien und Cyclopentadien; Olefine wie Ethylen und Propylen; Styrol; ungesättigte Säuren wie Acryl- und Methacrylsäure sowie deren Ester mit Mono- oder Dialkoholen mit 1 bis 10 C-Atomen; Acrylnitril; Vinylverbindungen wie Vinylester von Carbonsäuren mit 2 bis 18, vorzugsweise mit 2 bis 4 C-Atomen.

Bevorzugte Vinylchloridpolymerisate (Komponente A) sind Homopolymere des Vinylchlorids, Copolymere des Vinylchlorids mit Vinylacetat oder einem Fumarsäureester mit einem aliphatischen, gesättigten und einwertigen Alkohol mit 4 bis 8 C-Atomen, und/oder Pfropf-Copolymere, bestehend aus Ethylen, Vinylacetat und Vinylchlorid; diese Polymerisate werden zweckmäßigerweise nach dem Masse-, Suspensions- oder emulgatorarmen (Emulgator weniger als 1,5 Gew.-%, bezogen auf das Polymerisat) Emulsions-Polymerisationsverfahren hergestellt.

Die K-Werte (DIN 53 726) der Vinylchloridpolymerisate betragen zweckmäßigerweise 50 bis 80, vorzugsweise 55 bis 70.

Die Menge an Vinylchloridpolymerisat in der erfindungsgemäßen Formmasse beträgt vorzugsweise 60 bis 80 Gew.-%, bezogen auf das Gewicht der Formmasse.

Die erfindungsgemäß einzusetzenden chlorierten Polyethylene (Komponente B) sind Chlorierungsprodukte von Polyethylen und/oder von Mischpolymerisaten des Ethylens mit geringen Anteilen, vorzugsweise mit höchstens 1 bis 5 Mol-% Propen oder Buten-(1). Das Ethylenpolymerisat, das chloriert ist, kann im Niederdruck- oder Hochdruckverfahren hergestellt worden sein. Chloriertes Niederdruck-Polyethylen ist bevorzugt. Das mittlere Molekulargewicht des chlorierten Polyethylens beträgt zweckmäßigerweise etwa 30 000 bis 300 000, vorzugsweise etwa 40 000 bis 100 000 (berechnet aus dem Chlorgehalt und dem gelchromatographisch bestimmten Molekulargewicht des Ausgangspolyethylens; vgl. Zeitschrift »Makromolekulare Chemie«, Band 26, Jahr 1958, Seiten 96 bis 101, Verlag Dr. Alfred Hüthig, Heidelberg, Bundesrepublik Deutschland). Entscheidend ist der Gehalt an Chlor. Er beträgt 20 bis 50 Gew.-%, vorzugsweise 30 bis 42 Gew.-%, bezogen auf das chlorierte Polyethylen.

Die erfindungsgemäß einzusetzenden chlorierten Ethylenpolymerisate lassen sich nach den verschiedenen bekannten Verfahren herstellen, beispielsweise durch Chlorierung in homogener Phase, das heißt in Lösung, sowie durch Chlorierung in heterogener Phase, vorzugsweise in wäßriger Suspension oder in der Gasphase, zum Beispiel in der Wirbelschicht. Die Chlorierung wird dabei vorzugsweise so durchgeführt, daß möglichst homogen chlorierte Produkte entstehen, die im wesentlichen keine unchlorierten Polyolefinmoleküle mehr enthalten (in denen also möglichst jedes Polyolefinmolekül mindestens ein Chloratom enthält) und im Röntgenspektrum eine Restkristallinität von höchstens 5 Gew.-%, vorzugsweise höchstens 3 Gew.-%, aufweisen.

Die Menge an chloriertem Ethylenpolymerisat in der erfindungsgemäßen Formmasse beträgt vorzugsweise 10 bis 20 Gew.-%, bezogen auf das Gewicht der Formmasse.

Das erfindungsgemäß einzusetzende Polymethylmethacrylat (Komponente C) ist ein Polymerisat des Esters aus Methacrylsäure und Methanol (Methylmethacrylat). Das Molekulargewicht des Polymethylmethacrylats kann in weiten Grenzen variieren. Bevorzugt sind Polymethylmethacrylate mit einer relativen Viskosität von 1,2 bis 20, vorzugsweise 4 bis 15 (gemessen in einer 1gew.-%igen Lösung in Chloroform mittels des Ubbelohde-Viskosimeters mit der Kapillare Oa).

Die erfindungsgemäß einzusetzenden Polymethylmethacrylate lassen sich nach den verschiedenen bekannten Verfahren herstellen, beispielsweise durch die übliche Polymerisation von Methylmethacrylat in wäßriger Emulsion.

Die Menge an Polymethylmethacrylat in der erfindungsgemäßen Formmasse beträgt vorzugsweise 6 bis 12 Gew.-%, bezogen auf das Gewicht der Formmasse.

Die erfindungsgemäß einzusetzenden Weichmacher (Komponente D) sind mit Vinylchloridpolymerisaten verträglich. Zu diesen Weichmachern, die auch in solchen Mengen, die über den erfindungsgemäß zu verwendenden liegen, mit Polyvinylchlorid verträglich sind und aus den hergestellten Formkörpern nicht ausschwitzen, zählen bekanntlich die Primär- und die Sekundärweichmacher für Polyvinylchlorid (vgl. Zeitschrift »Kunststoff-Rundschau«, Heft 6, Jahr 1972, Seiten 251 bis 260 und Zeitschrift »Kunststoffe«, Jahr 1976, Seiten 674 und 679). Im Sinne der Erfindung kommen somit grundsätzlich die für Vinylchloridpolymerisate bekannten Primär- und Sekundärweichmacher in Betracht, wie sie beispielsweise in den zitierten Zeitschriften oder in der Monographie »Polyvinylchlorid und Vinylchlorid-Mischpolymerisate« von Helmut Kainer, Springer-Verlag, Berlin, Heidelberg, New York, Jahr 1965, Seiten 259 bis 319, angeführt sind.

Die bei den erfindungsgemäßen Formmassen in Betracht kommenden Weichmacher sind also durch die angegebene Eigenschaft »mit Vinylchloridpolymerisaten verträglich« klar und eindeutig gekennzeichnet.

Aus der großen Zahl der in Betracht kommenden Weichmacher werden zweckmäßigerweise solche aus der Gruppe der Phosphorsäureester, Phthalsäureester, Di- und Tricarbonsäureester, Fettsäureester, Sulfonsäureester und der epoxidierten Öle eingesetzt.

Bevorzugte Weichmacher sind solche aus der Gruppe, bestehend aus

a)  Phosphorsäureestern,
b)  Phthalsäureestern,
c)  Estern aus Fettsäuren mit 4 bis 18 C-Atomen oder aliphatischen und gesättigten Dicarbonsäuren mit 2 bis 12 C-Atomen und einwertigen, gesättigten und aliphatischen Alkoholen mit 1 bis 18 C-Atomen oder aromatischen Alkoholen,
d)  epoxidierten Ölen, und
e)  Estern aus Fettsäuren mit 4 bis 18 C-Atomen oder aliphatischen und gesättigten Dicarbonsäuren mit 2 bis 12 C-Atomen und 2- oder 3wertigen, gesättigten und aliphatischen Alkoholen, wobei die Viskosität dieser Polyester-Weichmacher 2000 bis 13 000 mPa s beträgt.

Besonders bevorzugt sind Weichmacher aus der Gruppe bestehend aus

a)  Phthalsäureestern,
b)  Estern aus aliphatischen und gesättigten Dicarbonsäuren mit 4 bis 10 C-Atomen und einwertigen, gesättigten und aliphatischen Alkoholen mit 1 bis 10 C-Atomen,
c)  epoxidiertem Sojabohnenöl, und
d)  Estern aus Fettsäuren mit 12 bis 18 C-Atomen oder aliphatischen und gesättigten Dicarbonsäuren mit 4 bis 10 C-Atomen und Ethylenglykolen, Propylenglykolen oder Butylenglykolen mit 1 bis 5 Ethylen-, Propylen- bzw. Butylen-Einheiten pro Molekül, wobei die Viskosität dieser Polyester-Weichmacher 2000 bis 13 000 mPa s beträgt.

Die Viskosität der Polyesterweichmacher (auch Polymerweichmacher genannt) wird nach DIN 51 550 bei 20° C gemessen.

Sie beträgt vorzugsweise 3000 bis 10 000 mPa s.

Als zweckmäßige Weichmacher seien beispielsweise genannt: Diphenyloctylphosphat, Triphenylphosphat, Alkylsulfonsäureester des Phenols, Acetyltributylcitrat, Phthalsäure-di-2-ethylhexylester, Phthalsäure-di-nonylester, Phthalsäure-di-decylester, Adipinsäure-di-2-ethylhexylester, Adipinsäure-di-nonylester, epoxidiertes Sojabohnenöl, Polyester aus Adipinsäure mit Propandiol (Propylenglykol) mit einer Viskosität von 2000 bis 4000 mPa s, Polyester aus Adipinsäure mit Butandiol (Butylenglykol) mit einer Viskosität von 6000 bis 8000 mPa s, Polyester aus Adipinsäure mit Butandiol mit einer Viskosität von etwa 10 000 mPa s.

Wenn die erfindungsgemäßen Formkörper besonders hohe Transparenz aufweisen sollen, wird als Weichmacher ein Polyesterweichmacher (flüssiger Polymerweichmacher) und als Vinylchloridpolymerisat eine Masse-, Suspensions- und/oder emulgatorarmes Emulsionspolymerisat eingesetzt.

Die Menge an Weichmacher in der erfindungsgemäßen Formmasse beträgt vorzugsweise 3 bis 9 Gew.-%, bezogen auf das Gewicht der Formmasse.

Die erfindungsgemäßen Formmassen aus den beschriebenen Komponenten A), B), C) und D) enthalten zweckmäßigerweise auch noch die für die Verarbeitung von Vinylchloridpolymerisaten vorteilhaften Hilfsstoffe, vorzugsweise Wärmestabilisatoren und Gleitmittel. Sie können auch noch besondere Additive wie Farbstoffe, spezielle Zusatzstoffe wie Ethylen-Vinylacetat-Copolymere und Polyethylen, antistatisch wirkende Substanzen und dergleichen enthalten.

Als Wärmestabilisatoren werden zweckmäßigerweise eingesetzt Mono- und Dialkyl-Zinnverbindungen mit 1 bis 10 C-Atomen im Alkylrest, bei denen die restlichen Wertigkeiten des Zinns über Sauer-

4

stoff und/oder Schwefelatome mit weiteren Substituenten verbunden sind; Aminocrotonsäureester; Harnstoff- und Thioharnstoffderivate, beispielsweise Monophenylharnstoff und Diphenylharnstoff; 1-Phenylindol; Salze der Erdalkalimetalle sowie des Zinks, Cadmiums oder Bleis von aliphatischen Carbonsäuren, Oxycarbonsäuren oder von gegebenenfalls alkylierten aromatischen Hydroxyverbindungen; basische oder neutrale Bleisalze anorganischer Säuren, beispielsweise der Schwefel, Phosphor- oder phosphorigen Säure. Bevorzugt verwendet werden die Organozinnschwefel Stabilisatoren, beispielsweise Dimethylzinn-bis-2-ethylhexylthioglykolat, Di-n butylzinn-bis 2 ethylhexylthioglykolat.

Die Stabilisatoren werden in einer Menge von 0,5 bis 3,0 Gew.-%, vorzugsweise 0,8 bis 2,0 Gew.-%, bezogen auf das Gewicht der Formmasse, eingesetzt.

Zusätzlich zu den Stabilisatoren können auch noch übliche Costabilisatoren und/oder Antioxidantien eingesetzt werden, beispielsweise alkylsubstituierte, aromatische Hydroxylverbindungen wie Di-tert.-butylparakresol, Dibutylhydroxynaphthalin oder tert.-Butylhydroxyanisol, und Organophosphorigsäureester wie Tris-(mono- oder di-)nonylphenylphosphite. Die wirksame Menge an Costabilisatoren und Antioxidantien liegt im allgemeinen bei jeweils 0,05 bis 2,0 Gew.-%, bezogen auf das Gewicht der Formmasse.

Als Gleitmittel werden zweckmäßigerweise die folgenden Verbindungen eingesetzt. Höhere aliphatische Carbonsäuren oder Oxycarbonsäuren, deren Alkali- oder Erdalkalisalze, deren Ester oder deren Amide, beispielsweise Stearinsäure, Montansäure, Glycerinmonooleat, Bis-stearyl- oder Bis-palmitoyl-ethylendiamin, Montansäureester von Ethandiol oder 1,3-Butandiol, gegebenenfalls teilweise verseift; Fettalkohole mit mehr als 10 C-Atomen und deren Alkylether; und Hartparaffine. Vorteilhafte Gleitmittel sind Wachs OP, ein 1,3-Butandiolmontansäureester gekälkt, so daß etwa 40 Gew.-% der zur Kälkung eingesetzten Montansäure als Calciumsalz vorliegen, Wachs E, ein 1,3-Butandiolmontansäureester, Stearinsäure und Bis-stearylethylendiamin. Der Anteil an Gleitmittel in den Formmassen beträgt 0,1 bis 2,5 Gew.-%, vorzugsweise 0,5 bis 1,5 Gew.-%, bezogen auf das Gewicht der Formmasse.

Als Additive mit antistatischer Wirkung können beispielsweise die bei Vinylchloridpolymerisaten üblichen quaternären Ammoniumsalze in einer Menge von etwa 0,05 bis 1,0 Gew.-%, bezogen auf das Gewicht der Formmasse, eingesetzt werden.

Polyethylen und Ethylen-Vinylacetat-Copolymere werden zweckmäßigerweise in einer Menge von 1 bis 10 Gew.-%, bezogen auf das Gewicht der Formmasse, eingesetzt.

Die Herstellung der erfindungsgemäßen Formmassen erfolgt durch Zusammenmischen der einzelnen Komponenten, zweckmäßigerweise in einem mit Mischwerkzeugen ausgerüsteten Mischer.

Die Verarbeitung der erfindungsgemäßen Formmassen zu Formkörpern erfolgt nach den für Vinylchloridpolymerisate bekannten Verarbeitungsverfahren. Im Falle der Herstellung von Folien werden die einzelnen Komponenten in einer üblichen Mischvorrichtung, beispielsweise in einem Schnellmischer, gemischt und auf einem Extruder oder Kalander bei Arbeitstemperaturen von 80 bis 230 C, vorzugsweise von 150 bis 220° C, zu einer Folie verarbeitet, wobei die Dicke der Folie in der Regel 50 bis 700 µm, vorzugsweise 100 bis 400 µm, beträgt. Die Kalandrierung der zweckmäßigerweise in einem Kneter oder einem Walzwerk vorgelierten Mischung erfolgt vorzugsweise auf einem 4- oder 5-Walzenkalander nach dem Hochtemperaturverfahren, wobei die Walzen im allgemeinen auf eine Temperatur von 150 bis 230° C erhitzt sind. Die kalandrierte Folie wird von der letzten Kalanderwalze abgezogen, mit Hilfe von Kühlwalzen abgekühlt und in der Regel einer Aufwickeleinrichtung zugeführt.

Die erfindungsgemäßen Formmassen zeichnen sich durch ihre leichte Verarbeitbarkeit, vorzugsweise beim Kalandrieren oder Extrudieren, aus. Sie lassen sich beispielsweise ohne Schwierigkeiten auch mit relativ hoher Geschwindigkeit kalandrieren. Ihre Schmelzviskosität liegt in einem insbesondere für die Kalandrierung sehr günstigen Bereich.

Die erfindungsgemäßen Formkörper besitzen eine hohe Schlagzähigkeit, Witterungsbeständigkeit, insbesondere UV-Stabilität, und eine hohe Transparenz.

Die erfindungsgemäßen Formkörper eignen sich besonders gut für den Außeneinsatz. In Form von Folien können sie vorteilhaft, beispielsweise als Schutzfolie auf dekorbeschichteten Blechen, als sogenannte Schichtplatten oder als sogenannte Aufklebefolie, beispielsweise auf Fahrzeuge, eingesetzt werden.

Die Erfindung wird nun anhand von Beispielen noch näher erläutert.

Vergleichsbeispiele

Beispiel 1

52,0 Gew.-% Vinylchlorid-Homopolymerisat mit K-Wert 60
25,0 Gew.-% chloriertes Polyethylen mit einem Chlorgehalt von 34 Gew.-%
20,0 Gew.-% Polymethylmethacrylat mit einer relativen Viskosität von 12,3
 1,5 Gew.-% Wärmestabilisator
 1,5 Gew.-% Gleitmittel

### Beispiel 2

44,3 Gew.-% Vinylchlorid-Homopolymerisat mit K-Wert 65
40,0 Gew.-% Copolymerisat mit K-Wert 60 aus 90 Gew.-% Vinylchlorid und 10 Gew.-% Vinylacetat
10,0 Gew.-% chloriertes Polyethylen mit einem Chlorgehalt von 39 Gew.-%
3,0 Gew.-% Polymethylmethacrylat mit einer relativen Viskosität von 6,1
1,8 Gew.-% Wärmestabilisator
0,9 Gew.-% Gleitmittel

### Erfindungsgemäße Beispiele

### Beispiel 3

- 42,5 Gew.-% Vinylchlorid-Homopolymerisat mit K-Wert 60
25,0 Gew.-% chloriertes Polyethylen mit einem Chlorgehalt von 34 Gew.-%
20,0 Gew.-% Polymethylmethacrylat mit einer relativen Viskosität von 12,3
10,0 Gew.-% Di-2-ethylhexylphthalat (Dioctylphthalat)
1,5 Gew.-% Wärmestabilisator
1,0 Gew.-% Gleitmittel

### Beispiel 4

59,5 Gew.-% Vinylchlorid-Homopolymerisat mit K-Wert 57
20,0 Gew.-% chloriertes Polyethylen mit einem Chlorgehalt von 39 Gew.-%
12,0 Gew.-% Polymethylmethacrylat mit einer relativen Viskosität von 6,1
6,0 Gew.-% Adipinsäuremonobutylenglykolpolyester mit einer Viskosität bei 20° C von 6500 mPa s
2,0 Gew.-% Wärmestabilisator
0,5 Gew.-% Gleitmittel

### Beispiel 5

24,7 Gew.-% Vinylchlorid-Homopolymerisat mit K-Wert 65
30,0 Gew.-% Copolymerisat mit K-Wert 60 aus 90 Gew.-% Vinylchlorid und 10 Gew.-% Vinylacetat
25,0 Gew.-% chloriertes Polyethylen mit einem Chlorgehalt von 34 Gew.-%
10,0 Gew.-% Polymethylmethacrylat mit einer relativen Viskosität von 5,7
8,0 Gew.-% Adipinsäuremonobutylenglykolpolyester mit einer Viskosität bei 20° C von 8000 mPa s
1,8 Gew.-% Wärmestabilisator
0,5 Gew.-% Gleitmittel

### Beispiel 6

60,7 Gew.-% Vinylchlorid-Homopolymerisat mit K-Wert 57
15,0 Gew.-% Pfropfpolymerisat von (90 Gew.-%) Vinylchlorid auf (10 Gew.-%) Ethylen (40 Gew.-%)-Vinylacetat (60 Gew.-%)-Copolymerisat
15,0 Gew.-% chloriertes Polyethylen mit einem Chlorgehalt von 39 Gew.-%
5,0 Gew.-% Polymethylmethacrylat mit einer relativen Viskosität von 6,1
2,0 Gew.-% epoxidiertes Sojabohnenöl
1,8 Gew.-% Wärmestabilisator
0,5 Gew.-% Gleitmittel

### Beispiel 7

71,7 Gew.-% Copolymerisat mit K-Wert 60 aus 90 Gew.-% Vinylchlorid und 10 Gew.-% Vinylacetat
18,0 Gew.-% chloriertes Polyethylen mit einem Chlorgehalt von 41 Gew.-%
3,0 Gew.-% Polymethylmethacrylat mit einer relativen Viskosität von 12,3
3,0 Gew.-% Diphenyloctylphosphat
1,5 Gew.-% Wärmestabilisator
0,8 Gew.-% Gleitmittel
2,0 Gew.-% Ethylen (40 Gew.-%)-Vinylacetat (60 Gew.-%)-Copolymerisat

## Beispiel 8

64,0 Gew.-% Vinylchlorid-Homopolymerisat mit K-Wert 60
16,0 Gew.-% chloriertes Polyethylen mit einem Chlorgehalt von 34 Gew.-%
8,0 Gew.-% Polymethylmethacrylat mit einer relativen Viskosität von 1,3
4,0 Gew.-% Acetyltributylcitrat
1,4 Gew.-% Wärmestabilisator
0,6 Gew.-% Gleitmittel
6,0 Gew.-% Polyethylen

Die in den Beispielen angeführten Komponenten wurden in einem üblichen Schnellmischer gemischt, in einem Kneter bei einer Temperatur von etwa 140°C vorgeliert und auf einem 4-Walzenkalander, dessen Walzen (in Folienlaufrichtung) auf 190°C bis 210°C erhitzt sind, zu Folien gleicher Dicke — jeweils 250 µm — verarbeitet.

Die Verarbeitbarkeit der Formmassen wurde mit den Bewertungen: sehr gut, gut und mangelhaft bewertet.

An den Folien wurde gemessen die Schlagzähigkeit (in kJ/m²) in der Längs- und Querrichtung der Folienproben nach DIN 53 448, die Trübungszahl (in %) nach ASTM D 1003-61 Standard Test Method for Haze and Luminious Transmittance of Transparent Plastics, wobei die Folienprobe vor der Messung (um bei der Messung der Trübungszahl ausschließlich die Materialtrübung zu erhalten) zwischen zwei Glasplatten mit Tetralin benetzt wurde, und die UV-Stabilität in einer ultravioletten Lichtstrahlung einer Hochdruckquecksilberdampflampe mit der Leistung von 500 Watt, bei einem Abstand der Folienprobe von der Lampe von 25 cm; es wurde die Zeit festgehalten, nach der die Folienprobe eine deutliche Braunfärbung zeigte (UV-Stabilität in Stunden).

In der nachstehenden Tabelle sind die Meßergebnisse bei den Folien aus den Beispielen zusammengefaßt. Sie beweisen die oben angeführten unerwartet vorteilhaften Eigenschaften der erfindungsgemäßen Formmassen und Formkörper.

Tabelle

Meßergebnisse bei den Folien gemäß den Beispielen

| Beispiel Nr. | Verarbeit- barkeit | Schlagzugzähigkeit (kJ/m²) | | Trübungs- zahl (%) | UV-Stabilität (Stunden) |
|---|---|---|---|---|---|
| | | längs | quer | | |
| 1 | mangelhaft | 1071 | 593 | 9 | kleiner als 1 |
| 2 | mangelhaft | 755 | 448 | 6 | kleiner als 1 |
| 3 | gut | 698 | 858 | 11 | größer als 16 |
| 4 | sehr gut | 425 | 379 | 11 | 4 |
| 5 | gut | 719 | 711 | 6 | 4 |
| 6 | sehr gut | 853 | 599 | 9 | 4 |
| 7 | gut | 566 | 404 | 16 | 3 |
| 8 | gut | 672 | 659 | 25 | 4 |

## Patentansprüche

1. Thermoplastische Formmasse auf der Basis von Vinylchloridpolymeren und Polymeren zur Schlagzähmodifizierung, bestehend im wesentlichen aus

A) 35 bis 89 Gew.-% Vinylchloridpolymerisat, ausgewählt aus der Gruppe der Homopolymeren des Vinylchlorids und Vinylchlorid-Einheiten enthaltenden Copolymeren, wobei in der Komponente A) der Anteil an polymerisierten Vinylchlorid-Einheiten mindestens 70 Gew.-%, bezogen auf das Gewicht der Komponente A), beträgt;

B) 7 bis 30 Gew.-% chloriertem Polyethylen mit einem Chlorgehalt von 20 bis 50 Gew.-%, bezogen auf das Gewicht des chlorierten Polyethylens;

C) 3 bis 20 Gew.-% Polymethylmethacrylat; und

D) 1 bis 15 Gew.-% von mit Vinylchloridpolymerisaten verträglichen Weichmachern, Gewichtsprozente jeweils bezogen auf das Gewicht der Formmasse.

2. Formmassen nach Anspruch 1, dadurch gekennzeichnet, daß sie zusätzlich

E) 0,5 bis 3 Gew.-% Wärmestabilisator für Vinylchloridpolymerisate; und

F) 0,1 bis 2,5 Gew.-% Gleitmittel für Vinylchloridpolymerisate enthalten, Gewichtsprozente jeweils bezogen auf das Gewicht der Formmasse.

3. Formmassen nach Anspruch 2, dadurch gekennzeichnet, daß der Weichmacher ausgewählt ist aus der Gruppe bestehend aus Phosphorsäureestern, Phthalsäureestern, Dicarbonsäureestern, Tricarbonsäureestern, Fettsäureestern, Sulfonsäureestern und epoxidierten Ölen.

4. Formmassen nach Anspruch 3, dadurch gekennzeichnet, daß der Weichmacher ausgewählt ist aus der Gruppe bestehend aus a) Phosphorsäureestern, b) Phthalsäureestern, c) Estern aus Fettsäuren mit 4 bis 18 C-Atomen oder aliphatischen und gesättigten Dicarbonsäuren mit 2 bis 12 C-Atomen und einwertigen, gesättigten und aliphatischen Alkoholen mit 1 bis 18 C-Atomen oder aromatischen Alkoholen, d) epoxidierten Ölen, und e) Estern aus Fettsäuren mit 4 bis 18 C-Atomen oder aliphatischen und gesättigten Dicarbonsäuren mit 2 bis 12 C-Atomen und zwei- oder dreiwertigen, gesättigten und aliphatischen Alkoholen, wobei die Viskosität dieser Polyester-Weichmacher 2000 bis 13 000 mPa s beträgt.

5. Formmassen nach Anspruch 4, dadurch gekennzeichnet, daß der Weichmacher ausgewählt ist aus der Gruppe bestehend aus a) Phthalsäureestern, b) Estern aus aliphatischen und gesättigten Dicarbonsäuren mit 4 bis 10 C-Atomen und einwertigen, gesättigten und aliphatischen Alkoholen mit 1 bis 10 C-Atomen, c) epoxidiertem Sojabohnenöl, und d) Estern aus Fettsäuren mit 12 bis 18 C-Atomen oder aliphatischen und gesättigten Dicarbonsäuren mit 4 bis 10 C-Atomen und Ethylenglykolen, Propylenglykolen oder Butylenglykolen mit 1 bis 5 Ethylen-, Propylen- bzw. Butylen-Einheiten pro Molekül, wobei die Viskosität dieser Polyester-Weichmacher 2000 bis 13 000 mPa s beträgt.

6. Formmassen nach Anspruch 5, dadurch gekennzeichnet, daß die Viskosität der Polyester-Weichmacher 3000 bis 10 000 mPa s beträgt.

7. Formmassen nach Anspruch 2, dadurch gekennzeichnet, daß das Vinylchloridpolymerisat ausgewählt ist aus der Gruppe bestehend aus Homopolymeren des Vinylchlorids, Copolymeren des Vinylchlorids mit Vinylacetat oder einem Fumarsäureester mit einem aliphatischen, gesättigten und einwertigen Alkohol mit 4 bis 8 C-Atomen und Pfropfcopolymeren aus Ethylen, Vinylacetat und Vinylchlorid.

8. Formmassen nach Anspruch 2, dadurch gekennzeichnet, daß das chlorierte Polyethylen einen Chlorgehalt von 30 bis 42 Gew.-%, bezogen auf das Gewicht des chlorierten Polyethylens, hat.

9. Formmassen nach Anspruch 2, dadurch gekennzeichnet, daß das Polymethylmethacrylat eine relative Viskosität von 1,2 bis 20 hat.

10. Formmassen nach Anspruch 2, dadurch gekennzeichnet, daß das Polymethylmethacrylat eine relative Viskosität von 4 bis 15 hat.

11. Formmassen nach Anspruch 2, bestehend im wesentlichen aus

A) 60 bis 80 Gew.-% Vinylchloridpolymerisat, ausgewählt aus der Gruppe bestehend aus Homopolymeren des Vinylchlorids, Copolymeren des Vinylchlorids mit Vinylacetat oder einem Fumarsäureester mit einem aliphatischen, gesättigten und einwertigen Alkohol mit 4 bis 8 C-Atomen und Pfropfcopolymeren aus Ethylen, Vinylacetat und Vinylchlorid, wobei in der Komponente A) der Anteil an polymerisierten Vinylchlorid-Einheiten mindestens 85 Gew.-%, bezogen auf das Gewicht der Komponente A), beträgt;

B) 10 bis 20 Gew.-% chloriertem Polyethylen mit einem Chlorgehalt von 30 bis 42 Gew.-%, bezogen auf das Gewicht des chlorierten Polyethylens;

C) 6 bis 12 Gew.-% Polymethylmethacrylat mit einer relativen Viskosität von 4 bis 15;

D) 3 bis 9 Gew.-% Weichmacher, ausgewählt aus der Gruppe bestehend aus a) Phthalsäureestern, b) Estern aus aliphatischen und gesättigten Dicarbonsäuren mit 4 bis 10 C-Atomen und einwertigen gesättigten und aliphatischen Alkoholen mit 1 bis 10 C-Atomen, c) epoxidiertem Sojabohnenöl, und d) Ester aus Fettsäuren mit 12 bis 18 C-Atomen oder aliphatischen und gesättigten Dicarbonsäuren mit 4 bis 10 C-Atomen und Ethylenglykolen, Propylenglykolen oder Butylenglykolen mit 1 bis 5 Ethylen-, Propylen- bzw. Butylen-Einheiten pro Molekül, wobei die Viskosität dieser Polyester-Weichmacher 3000 bis 10 000 mPa s beträgt;

E) 0,8 bis 2 Gew.-% Wärmestabilisator für Vinylchloridpolymerisate; und

F) 0,5 bis 1,5 Gew.-% Gleitmittel für Vinylchloridpolymerisate.

12. Folien, erhalten durch Kalandrieren oder Extrudieren einer Formmasse nach einem der Ansprüche 1 bis 11.

# 0 068 398

## Claims

1. A thermoplasic molding composition based on vinyl chloride polymers and impact modifying polymers consisting essentially of:

A) 35 to 89% by weight of a vinyl chloride polymer selected from the group consisting of homopolymers of vinyl chloride and copolymers containing vinyl chloride units, the proportion of polymerised vinyl chloride units in the component A) being at least 70% by weight, relative to the weight of the component A);

B) 7 to 30% by weight of chlorinated polyethylene having a chlorine content of 20 to 50% by weight, relative to the weight of the chlorinated polyethylene;

C) 3 to 20% by weight of polymethyl methacrylate; and

D) 1 to 15% by weight of plasticisers which are compatible with vinyl chloride polymers, percentages by weight relating in each case to the weight of the molding composition.

2. A molding composition as claimed in claim 1 which additionally contains:

E) 0.5 to 3% by weight of a heat stabiliser for vinyl chloride polymers; and

F) 0.1 to 2.5% by weight of a lubricant for vinyl chloride polymers, percentages by weight relating in each case to the weight of the molding composition.

3. A molding composition as claimed in claim 2, wherein the plasticiser is selected from the group consisting of phosphoric acid esters, phthalic acid esters, dicarboxylic acid esters, tricarboxylic acid esters, fatty acid esters, sulfonic acid esters and epoxydised oils.

4. A molding composition as claimed in claim 3, wherein the plasticiser is selected from the group consisting of a) phosphoric acid esters, b) phthalic acid esters, c) esters formed from fatty acids having 4 to 18 C atoms or aliphatic and saturated dicarboxylic acids having 2 to 12 C atoms and monohydric, saturated and aliphatic alcohols having 1 to 18 C atoms or aromatic alcohols; d) epoxidised oils and e) esters formed from fatty acids having 4 to 18 C atoms or aliphatic and saturated dicarboxylic acids having 2 to 12 C atoms and dihydric or trihydric, saturated and aliphatic alcohols, the viscosity of these polyester plasticisers being 2,000 to 12,000 mPa s.

5. A molding composition as claimed in claim 4, wherein the plasticiser is selected from the group consisting of a) phthalic acid esters, b) esters formed from aliphatic and saturated dicarboxylic acids having 4 to 10 C atoms and monohydric, saturated and aliphatic alcohols having 1 to 10 C atoms, c) epoxidised soya bean oil and d) esters from fatty acids having 12 to 18 C atoms or aliphatic and saturated dicarboxylic acids having 4 to 10 C atoms and ethylene glycols, propylene glycols or butylene glycols having 1 to 5 ethylene, propylene or butylene units, respectively, per molecule, the viscosity of these polyester plasticisers being 2,000 to 13,000 mPa s.

6. A molding composition as claimed in claim 5, wherein the viscosity of the polyester plasticisers is 3,000 to 10,000 mPa s.

7. A molding composition as claimed in claim 2, wherein the vinyl chloride polymer is selected from the group consisting of homopolymers of vinyl chloride, copolymers of vinyl chloride with vinyl acetate or an ester of fumaric acid with an aliphatic, saturated and monohydric alcohol having 4 to 8 C atoms, and graft copolymers composed of ethylene, vinyl acetate and vinyl chloride.

8. A molding composition as claimed in claim 2, wherein the chlorinated polyethylene has a chlorine content of 30 to 42% by weight, relative to the weight of the chlorinated polyethylene.

9. A molding composition as claimed in claim 2, wherein the polymethyl methacrylate has a relative viscosity of 1.2 to 20.

10. A molding composition as claimed in claim 2, wherein the polymethyl methacrylate has a relative viscosity of 4 to 15.

11. A molding composition as claimed in claim 2, consisting essentially of:

A) 60 to 80% by weight of a vinyl chloride polymer selected from the group consisting of homopolymers of vinyl chloride, copolymers of vinyl chloride with vinyl acetate or an ester of fumaric acid with an aliphatic, saturated and monohydric alcohol having 4 to 8 C atoms, and graft copolymers composed of ethylene, vinyl acetate and vinyl chloride, the proportion of polymerised vinyl chloride units in the component A) being at least 85% by weight, relative to the weight of the component A);

B) 10 to 20% by weight of chlorinated polyethylene having a chlorine content of 30 to 42% by weight, relative to the weight of the chlorinated polyethylene;

C) 6 to 12% by weight of polymethyl methacrylate having a relative viscosity of 4 to 15;

D) 3 to 9% by weight of a plasticiser selected from the group consisting of a) phthalic acid esters, b) esters formed from alitic and saturated dicarboxylic acids having 4 to 10 C atoms and monohydric, saturated and aliphatic alcohols having 1 to 10 C atoms, c) epoxidised soya bean oil and d) esters formed from fatty acids having 12 to 18 C atoms or aliphatic and saturated dicarboxylic acids

9

having 4 to 10 C atoms and ethylene glycols, propylene glycols or butylene glycols having 1 to 5 ethylene, propylene or butylene units, respectively, per molecule, the viscosity of these polyester plasitcisers being 3,000 to 10,000 mPa s;

E)    0.8 to 2% by weight of a heat stabiliser for vinyl chloride polymers; and

F)    0.5 to 1.5% by weight of a lubricant for vinyl chloride polymers.

12. Sheeting obtained by calendering or extruding a molding composition as claimed in any of claims 1 to 11.

## Revendications

1. Matière à mouler thermoplastique à base de polymères du chlorure de vinyle et de polymères ayant pour fonction de modifier la résilience, matière à mouler qui est essentiellement constituée:

A)    de 35 à 89% en poids d'un polymère du chlorure de vinyle choisi dans l'ensemble comprenant les homopolymères du chlorure de vinyle et les copolymères renfermant des motifs de chlorure de vinyle, la teneur de la composante A) en motifs de chlorure de vinyle polymérisés étant d'au moins 70% en poids par rapport au poids de la composante A),

B)    de 7 à 30% en poids d'un polyéthylène chloré dont la teneur en chlore est de 20 à 50% en poids par rapport au poids du polyéthylène chloré,

C)    de 3 à 20% en poids d'un poly-(méthacrylate de méthyle), et

D)    de 1 à 15% en poids de plastifiants compatibles avec les polymères du chlorure de vinyle,

les pourcentages indiqués étant rapportés à chaque fois au poids de la matière à mouler.

2. Matières à mouler selon la revendication 1 caractérisées en ce qu'elles contiennent en outre:

E)    de 0,5 à 3% en poids d'un stabilisant à la chaleur pour des polymères du chlorure de vinyle, et

F)    de 0,1 à 2,5% en poids d'un lubrifiant pour polymères du chlorure de vinyle,

les pourcentages pondéraux étant à chaque fois rapportés au poids de la matière à mouler.

3. Matières à mouler selon la revendication 2 caractérisées en ce que le plastifiant est choisi dans l'ensemble constitué par les esters de l'acide phosphorique, les esters de l'acide phtalique, les esters des acides dicarboxyliques, les esters des acides tricarboxyliques, les esters des acides gras, les esters des acides sulfoniques et les huiles époxydées.

4. Matières à mouler selon la revendication 3 caractérisées en ce que le plastifiant est choisi dans l'ensemble constitué par a) les esters de l'acide phosphorique, b) les esters de l'acide phtalique, c) les esters dérivant des acides gras contenant de 4 à 18 atomes de carbone ou des acides dicarboxyliques aliphatiques saturés contenant de 2 à 12 atomes de carbone et des mono-alcools aliphatiques saturés contenant de 1 à 18 atomes de carbone ou des alcools aromatiques, , d) les huiles époxydées et e) les esters dérivant des acides gras contenant de 4 à 18 atomes de carbone ou des acides dicarboxyliques aliphatiques saturés contenant de 2 à 12 atomes de carbone et des diols ou des triols aliphatiques saturés, la viscosité de ces polyesters plastifiants étant comprise entre 2000 et 13 000 mPa s.

5. Matières à mouler selon la revendication 4 caractérisées en ce que le plastifiant est choisi dans l'ensemble constitué par a) les esters de l'acide phtalique, b) les esters dérivant des acides dicarboxyliques aliphatiques saturés contenant de 4 à 10 atomes de carbone et des mono-alcools aliphatiques saturés contenant de 1 à 10 atomes de carbone, c) l'huile de soja époxydée et d) les esters dérivant des acides gras contenant de 12 à 18 atomes de carbone ou des acides dicarboxyliques aliphatiques saturés contenant de 4 à 10 atomes de carbone et des éthylène-glycols, des propylène-glycols ou des butylène-glycols contenant, par molécule, de 1 à 5 motifs éthylènes, propylènes ou butylènes, la viscosité de ces polyesters plastifiants étant comprise entre 2000 et 13 000 mPa s.

6. Matières à mouler selon la revendication 5 caractérisées en ce que la viscosité des polyesters plastifiants est comprise entre 3000 et 10 000 mPa s.

7. Matières à mouler selon la revendication 2 caractérisées en ce que le polymère du chlorure de vinyle est choisi dans l'ensemble constitué par les homopolymères du chlorure de vinyle, les copolymères du chlorure de vinyle avec l'acétate de vinyle ou avec un ester fumarique d'un mono-alcool aliphatique saturé contenant de 4 à 8 atomes de carbone, et les copolymères greffés dérivant de l'éthylène, de l'acétate de vinyle et du chlorure de vinyle.

8. Matières à mouler selon la revendication 2 caractérisées en ce que le polyéthylène chloré a une teneur en chlore de 30 à 42% en poids par rapport au poids du polyéthylène chloré.

9. Matières à mouler selon la revendication 2 caractérisées en ce que le poly-(méthacrylate de méthyle) a une viscosité relative comprise entre 1,2 et 20.

10. Matières à mouler selon la revendication 2 caractérisées en ce que le poly-(méthacrylate de méthyle) a une viscosité relative comprise entre 4 et 15.

11. Matières à mouler selon la revendication 2 qui sont essentiellement constituées:

A) de 60 à 80% en poids d'un polymère du chlorure de vinyle choisi dans l'ensemble constitué par les homopolymères du chlorure de vinyle, les copolymères du chlorure de vinyle avec l'acétate de vinyle ou avec un ester fumarique d'un mono-alcool aliphatique saturé contenant de 4 à 8 atomes de carbone, et les copolymères greffés dérivant de l'éthylène, de l'acétate de vinyle et du chlorure de vinyle, la proportion des motifs de chlorure de vinyle incorporés par polymérisation dans la composante A) étant d'au moins 85% en poids par rapport au poids de la composante A),

B) de 10 à 20% en poids d'un polyéthylène chloré dont la teneur en chlore est comprise entre 30 et 42% en poids par rapport au poids du polyéthylène chloré,

C) de 6 à 12% en poids d'un poly-(méthacrylate de méthyle) dont la viscosité relative est comprise entre 4 et 15,

D) de 3 à 9% en poids d'un plastifiant choisi dans l'ensemble constitué par a) les esters de l'acide phtalique, b) les esters dérivant des acides dicarboxyliques aliphatiques saturés contenant de 4 à 10 atomes de carbone et des mono-alcools aliphatiques saturés contenant de 1 à 10 atomes de carbone, c) l'huile de soja époxydée et d) les esters dérivant des acides gras contenant de 12 à 18 atomes de carbone ou des acides dicarboxyliques aliphatiques saturés contenant de 4 à 10 atomes de carbone et des éthylène-glycols, des propylène-glycols ou des butylène-glycols contenant, par molécule, de 1 à 5 motifs éthylènes, propylènes ou butylènes, la viscosité de ces polyesters plastifiants étant comprise entre 3000 et 10 000 mPa s,

E) de 0,8 à 2% en poids d'un stabilisant à la chaleur pour polymères du chlorure de vinyle et

F) de 0,5 à 1,5% en poids d'un lubrifiant pour polymères du chlorure de vinyle.

12. Feuilles fabriquées par calandrage ou extrusion d'une matière à mouler selon l'une quelconque des revendications 1 à 11.